# EUROPÄISCHE PATENTANMELDUNG

(11) **EP 4 838 135 A1**
(43) Veröffentlichungstag der Anmeldung: **11.11.2026**
(21) Anmeldenummer: 26167470.9
(22) Anmeldetag: 25.03.2026
(51) Int. Cl.: F23R 3/36, F23R 3/28

(54) **DÜSENANORDNUNG, BRENNKAMMERANORDNUNG MIT EINER DÜSENANORDNUNG UND TRIEBWERK**

(30) Priorität: 06.05.2025 DE 102025117314
(71) Anmelder: Rolls-Royce Deutschland Ltd & Co KG, 15827 Blankenfelde-Mahlow (DE)
(72) Erfinder: CLEMEN, Carsten, 15827 Blankenfelde-Mahlow (DE); EGGELS, Ruud, 15827 Blankenfelde-Mahlow (DE)

(57) **Zusammenfassung**

Die Erfindung bezieht sich auf eine Düsenanordnung (100) zum Einbringen von gasförmigem Kraftstoff, insbesondere enthaltend Wasserstoff, und flüssigem Kraftstoff in eine Brennkammer (1) einer Gasturbine eines Flugzeugs, mit einem stromabseitigen, entlang einer Brennerachse (M) ausgerichteten Düsenhauptkörper (200) umfassend eine Flüssigdüsenanordnung (201) zur Zufuhr des flüssigen Kraftstoffes in die Brennkammer (1), einem stromaufseitigen Flansch (15) zur Montage der Düsenanordnung (100) an einem Außengehäuse (12) und mit einem zwischen dem Flansch (15) und dem Düsenhauptkörper (200) verlaufenden Schaft (202), wobei in dem Schaft (202) eine Flüssig-Zufuhrleitung (13) zur Leitung des flüssigen Kraftstoffes verläuft. Eine montagefreundliche Düsenanordnung wird dadurch bereitgestellt, dass in dem Schaft (202) weiterhin eine Gas-Zufuhrleitung (17) zur Leitung des gasförmigen Kraftstoffes verläuft, und dass die Düsenanordnung (100) zumindest eine Gas-Düsenvorrichtung (18) mit einem von dem Düsenhauptkörper (200) separaten, entlang einer Düsenachse (N) ausgerichteten Hauptkörperabschnitt (183) umfasst

## Beschreibung

Die Erfindung bezieht sich auf eine Düsenanordnung zum Einbringen von gasförmigem Kraftstoff, insbesondere enthaltend Wasserstoff, und flüssigem Kraftstoff in eine Brennkammer einer Gasturbine eines Flugzeugs, mit einem stromabseitigen, entlang einer Brennerachse ausgerichteten Düsenhauptkörper umfassend eine Flüssigdüsenanordnung zur Zufuhr des flüssigen Kraftstoffes in die Brennkammer, einem stromaufseitigen Flansch zur Montage der Düsenanordnung an einem Außengehäuse und mit einem zwischen dem Flansch und dem Düsenhauptkörper verlaufenden Schaft, wobei in dem Schaft eine Flüssig-Zufuhrleitung zur Leitung des flüssigen Kraftstoffes verläuft. Ferner bezieht sich die Erfindung auf eine Brennkammeranordnung mit einer Düsenanordnung und ein Triebwerk.

Eine derartige Düsenanordnung ist aus der DE 10 2023 204 572 A1 bekannt. Dabei umfasst die Düsenanordnung eine erste Injektorgruppe zum Einbringen eines flüssigen Kraftstoffes und eine zweite Injektorgruppe zum Einbringen eines gasförmigen Kraftstoffes. Mittels der zweiten Injektorgruppe kann auf einfache Weise eine Brennkammeranordnung gemäß dem Stand der Technik, die ausschließlich zum Betrieb mit Flüssigkraftstoff ausgebildet ist, hinsichtlich des (zusätzlichen) Betriebs mit Wasserstoff weitergebildet werden. Dabei ergeben sich Herausforderungen bei der Integration der zweiten Injektorgruppe insbesondere hinsichtlich des Bauraums und/oder der Montage.

Brennkammeranordnungen zum Betrieb mit Wasserstoff als Kraftstoff sind aus der DE 10 2005 048 815 A1, der DE 10 2022 208 339 A1, der US 2023/0408098 A1, der DE 10 2022 201 182 A1 und der US 2024/0318822 A1 bekannt.

Der Erfindung liegt die Aufgabe zugrunde, eine montagefreundliche Düsenanordnung der eingangs genannten Art sowie eine entsprechende Brennkammeranordnung und ein entsprechendes Triebwerk bereitzustellen.

Die Erfindung wird für die Düsenanordnung mit den Merkmalen des Anspruchs 1, für die Brennkammeranordnung mit den Merkmalen des Anspruchs 11 und für das Triebwerk mit den Merkmalen des Anspruchs 15 gelöst.

Bei der Düsenanordnung ist vorgesehen, dass in dem Schaft weiterhin eine Gas-Zufuhrleitung zur Leitung des gasförmigen Kraftstoffes verläuft, und dass die Düsenanordnung zumindest eine Gas-Düsenvorrichtung mit einem von dem Düsenhauptkörper separaten, entlang einer Düsenachse ausgerichteten Hauptkörperabschnitt umfasst.

Eine Gas-Kraftstoffleitung der Gas-Düsenvorrichtung verläuft durch die Gas-Zufuhrleitung und den Hauptkörperabschnitt.

Als Hauptkörperabschnitt wird derjenige Abschnitt bezeichnet, der zumindest im Wesentlichen entlang der Düsenachse ausgerichtet ist. Leichte Winkel-Abweichungen, z. B. um bis zu 40° oder um bis zu 10° oder 20°, von der Düsenachse, können stromauf des stromabseitigen Endabschnitts vorhanden sein.

Somit weist die Gas-Düsenvorrichtung den von dem Düsenhauptkörper separaten Hauptkörperabschnitt und einen durch die Gas-Zufuhrleitung gebildeten Schaftabschnitt auf. Der Schaftabschnitt ist in den Schaft der Düsenanordnung integriert, an dessen stromabseitigem Ende der Düsenhauptkörper mit der Flüssigdüsenanordnung angeordnet ist.

So ist auf einfache Weise eine z. B. aus dem Stand der Technik bekannte, zunächst ausschließlich zur Zugabe von Flüssigkraftstoff ausgebildete Düsenvorrichtung durch Teilintegration der Gas-Düsenvorrichtung weitergebildet, unter Bildung der erfindungsgemäßen Düsenanordnung. Damit kann mit vergleichsweise geringem konstruktivem Aufwand eine Düsenanordnung bereitgestellt werden, die sowohl für den (zeitgleichen und/oder separaten) Betrieb mit flüssigem als auch für den Betrieb mit gasförmigem Kraftstoff ausgebildet ist, und dabei einfach und platzsparend in eine Brennkammeranordnung integriert werden kann.

Die Flüssigdüsenanordnung weist insbesondere eine Zerstäuberanordnung zur Zerstäubung des flüssigen Kraftstoffes auf. Der Düsenhauptkörper weist insbesondere keine Gasdüse auf.

Der Schaft verläuft vorzugsweise gerade, entlang einer einzigen Achse zwischen dem Flansch und dem Düsenhauptkörper.

In einer zweckmäßigen Ausbildungsvariante ist vorgesehen, dass die Gas-Düsenvorrichtung eine Rohrleitung aufweist, insbesondere daraus gebildet ist, und vorzugsweise keinen (separaten, von der Flüssigdüsenanordnung unabhängigen) Luftkanal umfasst. Insbesondere bildet die Rohrleitung den Hauptkörperabschnitt. Ein in dem Hauptkörperabschnitt bzw. der Rohrleitung angeordneter Abschnitt eines Gas-Kraftstoffkanals, anschließend an den Abschnitt in der Gas-Zufuhrleitung, weist insbesondere einen zylindrischen Strömungsquerschnitt auf.

In einer Ausbildungsvariante insbesondere umfassend eine einzige Gas-Düsenvorrichtung pro Düsenhauptkörper ist vorzugsweise vorgesehen, dass die Gas-Zufuhrleitung (unter Bildung des Schaftabschnitts) unmittelbar, ohne Zwischenordnung einer anderen Leitungsstruktur und/oder eines anderen Leitungsabschnitts, in den Hauptkörperabschnitt übergeht. Dabei ändert der Gas-Kraftstoffkanal insbesondere seine Verlaufsrichtung von einer im Wesentlichen (bezüglich einer Mittelachse der Brennkammeranordnung) radialen Ausrichtung im Bereich des Schaftabschnitts bzw. der Gas-Zufuhrleitung in eine im Wesentlichen entlang der Düsenachse verlaufende Ausrichtung im Bereich des Hauptköperabschnitts.

In einer Ausbildungsvariante insbesondere umfassend mehr als eine Gas-Düsenvorrichtung pro Düsenhauptkörper ist vorzugsweise vorgesehen, dass zwischen der Gas-Zufuhrleitung und dem Hauptkörperabschnitt ein, insbesondere in einem Ringelement um den Düsenhauptkörper angeordnetes, Gasplenum angeordnet ist. Das Ringelement ist vorzugsweise an einem stromaufseitigen Abschnitt des Düsenhauptkörpers angeordnet. Dabei kann insbesondere der Schaft an dem Ring-element und der Düsenhauptkörper innerhalb des Ringelements mittels selbigem befestigt sein. Das Gasplenum ist insbesondere ringförmig umlaufend um den Düsenhauptkörper ausgebildet und bildet einen gemeinsamen Versorgungsraum für sämtliche dem betreffenden Düsenhauptkörper zugeordneten Gas-Düsenvorrichtungen. Auf diese Weise kann eine gleichmäßige Verteilung des gasförmigen Kraftstoffes auf mehrere Gas-Düsenvorrichtungen erreicht werden.

Zum mechanischen Schutz des Hauptkörperabschnitts kann vorteilhaft vorgesehen sein, dass um den Hauptkörperabschnitt zumindest abschnittsweise (vorzugsweise zwischen dem Schaft und der Frontplatte) eine Hüllvorrichtung angeordnet ist. Die Hüllvorrichtung kann mit der Rohrleitung radial umlaufend in Berührung stehen.

Für eine vorteilhafte Integration und/oder einen vorteilhaften Betrieb kann vorgesehen sein, dass (bezüglich der Brennerachse) der Hauptkörperabschnitt zumindest abschnittsweise, insbesondere an seinem stromabseitigen Ende, radial beabstandet von dem Düsenhauptkörper angeordnet ist. Ein Abstand (zwischen den Außenwandungen des Düsenhauptkörpers und dem Hauptkörperabschnitt) kann z. B. mindestens einem Querschnittsmaß (z. B. einem Durchmesser) des Hauptkörperabschnitts entsprechen. Auf diese Weise können neben dem Düsenhauptkörper auch der oder die Gas-Düsenvorrichtung/en radial und in Umlaufrichtung an einer vorteilhaften Position in der Frontplatte der Brenneranordnung integriert werden.

Zugunsten eines vorteilhaften Betriebs kann die Düsenanordnung an ihrem stromabseitigen Ende eine, insbesondere konisch, verengte Düsenspitze aufweisen, mit einem verengten Strömungsquerschnitt.

Vorteile für den Verbrennungsbetrieb ergeben sich, wenn der Hauptkörperabschnitt mit der Düsenachse
- parallel zu der Brennerachse des Düsenhauptkörpers oder
- in Richtung der Brennerachse geneigt ausgerichtet ist, beispielsweise derart, dass die Brennerachse und die Düsenachse sich in montiertem Zustand axial auf Höhe einer der Mischluftöffnungen einer Brennkammer (bezüglich der radialen Richtung und/oder der Umlaufrichtung) schneiden.

Insbesondere in diesem Zusammenhang kann vorteilhaft vorgesehen sein, dass die Brennerachse und die Düsenachse/n derart zueinander beabstandet angeordnet sind, dass in montiertem Zustand an einer Brennkammeranordnung aufweisend Mischluftöffnungen der Düsenhauptkörper und/oder der Hauptkörperabschnitt auf gleicher Position in Umlaufrichtung angeordnet sind/ist wie jeweils eine der Mischluftöffnungen.

Bevorzugte Ausbildungsvarianten bestehen darin, dass dem Düsenhauptkörper jeweils zumindest eine, z. B. genau eine, genau zwei, genau drei oder genau vier Gas-Düsenvorrichtung/en zugeordnet sind, d. h. die Gas-Zuleitung und die Flüssigzuleitung in einem gemeinsamen Schaft, dem Schaft des Düsenhauptkörpers, integriert sind. Die Gas-Düsenvorrichtung/en ist/sind (mit ihrer/ihren Düsenachse/n) in montiertem Zustand an einer Brennkammeranordnung in Ausbildung als Ringbrennkammer bezüglich einer Mittelachse derselben
- bei genau einer Gas-Düsenvorrichtung radial außen bzgl. der Brennerachse und umlaufend auf der gleichen Position wie die Brennerachse,
- bei genau zwei Gas-Düsenvorrichtungen radial auf gleicher Position wie die Brennerachse und umlaufend versetzt zu der Brennerachse und vorzugsweise äquidistant bzgl. der Brennerachse,
- bei genau drei Gas-Düsenvorrichtungen zwei derselben radial außen bzgl. der Brennerachse und eine innen bzgl. der Brennerachse und vorzugsweise äquidistant bzgl. der Brennerachse und/oder zueinander, und/oder
- bei genau vier Gas-Düsenvorrichtungen zwei derselben radial auf gleicher Position wie die Brennerachse und umlaufend versetzt bzgl. der Brennerachse und zwei radial außen und innen bzgl. der Brennerachse, und umlaufend auf gleicher Position, und vorzugsweise äquidistant bzgl. der Brennerachse und/oder zueinander, und/oder
- bei genau vier Gas-Düsenvorrichtungen zwei derselben radial außen und zwei radial innen, sowie jeweils umlaufend versetzt bzgl. der Brennerachse, und vorzugsweise äquidistant bzgl. der Brennerachse und/oder zueinander,
angeordnet.

Die erfindungsgemäße Brennkammeranordnung weist eine Brennkammer auf, umfassend eine eintrittsseitige Frontplatte mit einem brennkammerseitig an der Frontplatte flächig angeordneten Hitzeschild, Brennkammerwände zur Umgrenzung eines Brennraums, und zumindest eine entlang einer Brennerachse ausgerichtete Düsenanordnung nach einem der vorhergehenden Ansprüche, mit einem Düsenhauptkörper zur Zugabe von flüssigem Kraftstoff und mit einer Gas-Düsenvorrichtung zur Zugabe von gasförmigem Kraftstoff, insbesondere enthaltend Wasserstoff, über die Frontplatte mit dem Hitzeschild in den Brennraum.

Die Brennkammer kann insbesondere ringförmig umlaufend um eine Mittelachse ausgebildet sein und dabei mehrere Sektoren aufweisen, wobei insbesondere pro Sektor eine Frontplatte zur Bildung einer zusammenhängenden Frontplattenanordnung eintrittsseitig an der Brennkammer angeordnet ist.

Günstigerweise kann vorgesehen sein, dass in dem Hitzeschild jeweils ringförmig um die Gas-Düsenvorrichtung mehrere Kühlluftöffnungen angeordnet sind, die derart ausgebildet sind, dass ein jeweils hindurchtretender Kühlluftstrahl (bezüglich dessen Hauptströmungsrichtung im Betrieb) parallel oder radial nach außen strömend ausgerichtet ist.

Vorteilhaft ist die Düsenanordnung integrierbar, wenn die Gas-Düsenvorrichtung stromabseitig, ggf. jeweils, mit einer Dichtvorrichtung schwimmend an der Frontplatte, insbesondere in dem Hitzeschild gelagert ist. Auf diese Weise ist ein axiales Spiel beispielsweise zum Ausgleich thermischer Dehnung an der Brennkammeranordnung im Betrieb möglich.

Eine montagefreundliche Ausgestaltungsvariante besteht darin, dass stromauf der Frontplatte keine Haube angeordnet ist.

Die Erfindung wird nachfolgend anhand von Ausführungsbeispielen unter Bezugnahme auf die Zeichnungen näher erläutert. Es zeigen:
- Fig. 1: eine schematische Darstellung einer Brennkammeranordnung gemäß dem Stand der Technik, mit einer Flüssigkraftstoffdüse, im Längsschnitt,
- Fig. 2: eine schematische Darstellung einer erfindungsgemäßen Brennkammeranordnung, mit einer Düsenanordnung umfassend einen Düsenhauptkörper zur Zugabe von flüssigem Kraftstoff und eine Gas-Düsenvorrichtung, im Längsschnitt,
- Fig. 3: eine schematische Darstellung einer weiteren Ausbildungsvariante der erfindungsgemäßen Brennkammeranordnung im Längsschnitt,
- Fig. 4: eine schematische Darstellung einer weiteren Ausbildungsvariante der erfindungsgemäßen Brennkammeranordnung im Längsschnitt,
- Fig. 5A, 5B: jeweils eine schematische Darstellung einer Ausbildungsvariante einer erfindungsgemäßen Düsenanordnung, mit einem Schaft im Querschnitt mit Draufsicht auf einen Düsenhauptkörper,
- Fig. 6: eine schematische Darstellung einer Gas-Düsenvorrichtung der Düsenanordnung im Längsschnitt,
- Fig. 7: eine Ausbildungsvariante der Brennkammeranordnung umfassend Mischluftöffnungen, in schematischer Darstellung in Draufsicht,
- Fig. 8: eine weitere Ausbildungsvariante der Brennkammeranordnung umfassend Mischluftöffnungen, in schematischer Darstellung in Draufsicht,
- Fig. 9A - 9E: schematische Darstellungen von Frontplatten in Draufsicht, mit unterschiedlichen Positionen der Gas-Düsenvorrichtung/en,
- Fig. 10A - 10D: schematische Darstellungen von Frontplatten in Draufsicht, mit den unterschiedlichen Positionen der Gas-Düsenvorrichtung/en, und um die Gas-Düsenvorrichtung angeordneten Kühlluftöffnungen, und
- Fig. 11: ein Detail eines Teils der erfindungsgemäßen Brennkammeranordnung, mit der Integration der Düsenvorrichtung in eine Frontplatte.

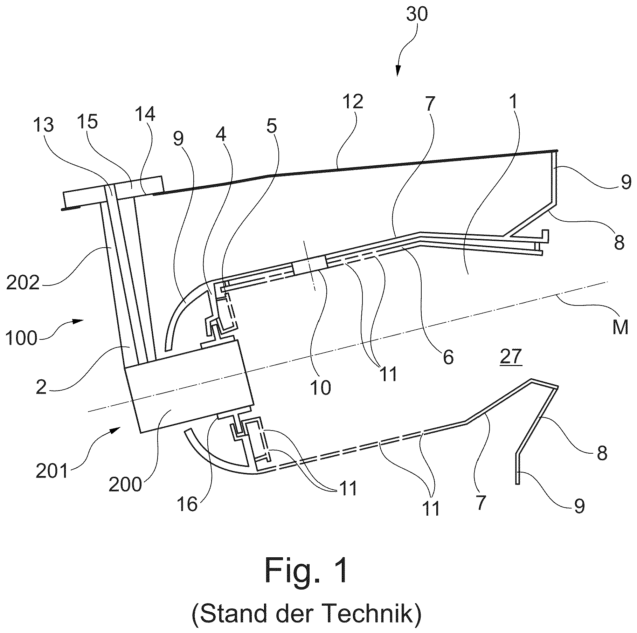

Fig. 1 zeigt schematisch in einem Längsschnitt eine aus dem Stand der Technik bekannte, beispielhafte Brennkammeranordnung 30, wobei eine Brennkammer 1 von einem Außengehäuse 12 umgeben in einem Flugzeugtriebwerk integriert ist (hier nicht vollständig gezeigt). Die Brennkammer 1 umfasst eine eintrittsseitige Frontplatte 4, an welcher brennkammerseitig ein Hitzeschild 5 angeordnet ist. Weiterhin umfasst die Brennkammer 1 zumindest eine äußere Brennkammerwand 7 und, optional, eine innere Brennkammerwand 6, die als Schindel ausgeführt sein kann. Die Brennkammerwände 6, 7 umgrenzen umfangsseitig einen Brennraum 27. Innerhalb der Brennkammerwände 6, 7 können Mischluftöffnungen 10 angeordnet sein. Zur Kühlung umfassen die Brennkammerwände 6, 7 sowie vorzugsweise der Hitzeschild 5 an der Frontplatte 4 eine Vielzahl von Kühlluftöffnungen 11.

An ihrem stromabseitigen Ende ist die Brennkammer 1 mittels einer Brennkammeraufhängung 8 und einem Brennkammerflansch 9 montiert.

Stromaufseitig der Frontplatte 4 weist die Brennkammer 1 für eine strömungsoptimierte Luftführung insbesondere eine Haube 3 auf.

Weiterhin umfasst die Brennkammer 1 zumindest eine Flüssigkraftstoffdüse 2 ausschließlich zur Zugabe von flüssigem Kraftstoff in den Brennraum 27. Die Flüssigkraftstoffdüse 2 weist einen Düsenhauptkörper 200 auf, der entlang einer Brennerachse M ausgerichtet und an dem die Flüssigkraftstoffdüse 2 mittels einer Brennerdichtung 16 an der Frontplatte 4 gelagert ist. Zudem weist die Flüssigkraftstoffdüse 2 einen Schaft 202 auf, in welchem eine Flüssig-Zufuhrleitung 13 angeordnet ist. Mittels des Schaftes 202, der durch eine passende Öffnung 14 in dem Außengehäuse 12 geführt ist, und mittels eines außerhalb des Außengehäuses 12 angeordneten Flansches 15 ist die Flüssigkraftstoffdüse 2 an dem Außengehäuse 12 befestigt.

Bei der Weiterbildung einer derartigen Brennkammeranordnung 1 hinsichtlich des (zusätzlichen) Betriebs mit Wasserstoff, wie beispielsweise aus der DE 10 2023 204 572 A1 bekannt, ergeben sich Herausforderungen bei der Integration zusätzlicher Düsen insbesondere hinsichtlich des Bauraums und/oder der Montage.

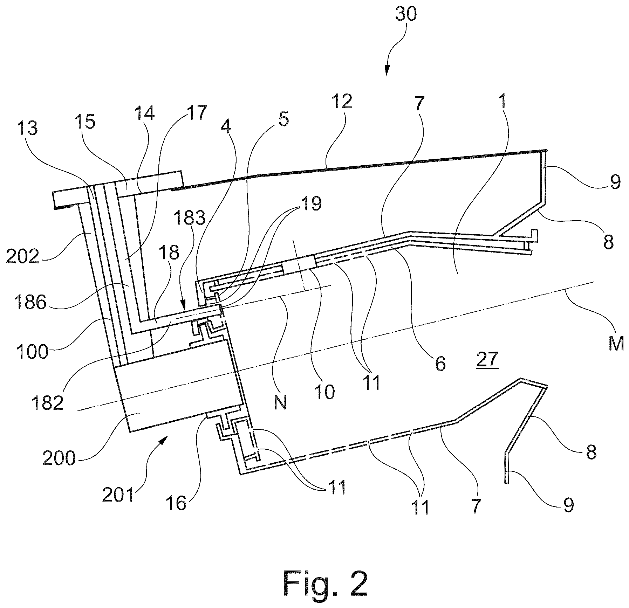

Fig. 2 zeigt eine erfindungsgemäß weitergebildete Brennkammeranordnung 30, wobei in einer Düsenanordnung 100 beispielhaft genau eine zusätzliche, separate Gas-Düsenvorrichtung 18, insbesondere in Ausbildung als Wasserstoffdüse, integriert ist. Dabei die weist Düsenanordnung 100 innerhalb des Schaftes 202 eine Flüssig-Zufuhrleitung 13 und eine Gas-Zufuhrleitung 17 zur Leitung des gasförmigen Kraftstoffes auf. Der Schaft 202 mit der Flüssig-Zufuhrleitung 13 und der Gas-Zufuhrleitung 17 verläuft insbesondere entlang einer (geraden) Achse zwischen dem Flansch 15 und dem Düsenhauptkörper 200.

Die Öffnung 14 in dem Außengehäuse 12 und/oder der Flansch 15 sind vorzugsweise gegenüber der in Fig. 1 gezeigten, bekannten Ausbildung vergrößert ausgeführt, um die Montage zu erleichtern und eine stabile Konstruktion zu ermöglichen.

Anders als die Flüssig-Zufuhrleitung 13 geht die Gas-Zufuhrleitung 17 nicht in den Düsenhauptkörper 200 über, sondern in einen von dem Düsenhauptkörper 200 verschiedenen (separaten) Hauptkörperabschnitt 183 einer Gas-Düsenvorrichtung 18. Der Düsenhauptkörper 200 ist nicht zur Zugabe von gasförmigem Brennstoff in den Brennraum 27 ausgebildet.

Die Gas-Düsenvorrichtung 18 weist den separaten Hauptkörperabschnitt 183 auf, der zumindest mit einem stromabseitigen Abschnitt entlang einer Düsenachse N ausgerichtet ist, die von der Brennerachse M verschieden ist. Insbesondere ist der Hauptkörperabschnitt 183 zumindest mit dem stromabseitigen Ende bzw. Abschnitt, vorzugsweise über die gesamte Länge radial von dem Düsenhauptkörper 200 beabstandet angeordnet.

Als Hauptkörperabschnitt 183 wird derjenige Abschnitt der Gas-Düsenvorrichtung 18 bezeichnet, in dem ein Gas-Kraftstoffkanal 186 zumindest im Wesentlichen entlang der Düsenachse N ausgerichtet ist. Leichte Abweichungen, z. B. um bis zu 40° oder um bis zu 10° oder 20°, bzgl. der Düsenachse N, können stromauf des stromabseitigen Endes vorhanden sein.

Die Gas-Düsenvorrichtung 18 weist eine Rohrleitung 182 auf, die insbesondere den Hauptkörperabschnitt 183 bildet. Der Hauptkörperabschnitt 183, insbesondere die Rohrleitung 182, umfasst ausschließlich den Gas-Kraftstoffkanal 186, und keinen Luftkanal. Bei dem in Fig. 2 gezeigten Ausführungsbeispiel geht die Gas-Zufuhrleitung 17, als Schaftabschnitt der Gas-Düsenvorrichtung 18, aus dem Schaft 202 unmittelbar, ohne Zwischenordnung einer anderen Leitungsstruktur und/oder eines anderen Leitungsabschnitts, in den Hauptkörperabschnitt 183 über. Dabei ist die Gas-Zufuhrleitung 17 kürzer ausgebildet als die Flüssig-Zufuhrleitung 13. Die Düsenachse N ist beispielhaft parallel zu der Brennerachse M ausgerichtet.

Für eine montagefreundliche Ausbildung weist die Brennkammeranordnung 30 keine Haube 3 auf.

Die Gas-Düsenvorrichtung 18 ist mittels separater Öffnungen 19 durch die Frontplatte 4 mit dem Hitzeschild 5 geführt.

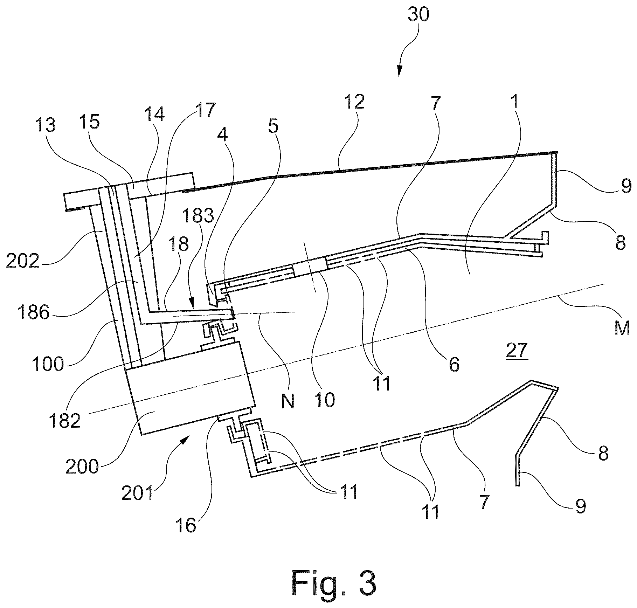

Fig. 3 zeigt ein weiteres Ausführungsbeispiel mit der erfindungsgemäßen Düsenanordnung 100, wobei der Hauptkörperabschnitt 183 mit der Düsenachse N zumindest mit radialer Richtungskomponente in Richtung der Brennerachse M geneigt ausgerichtet ist.

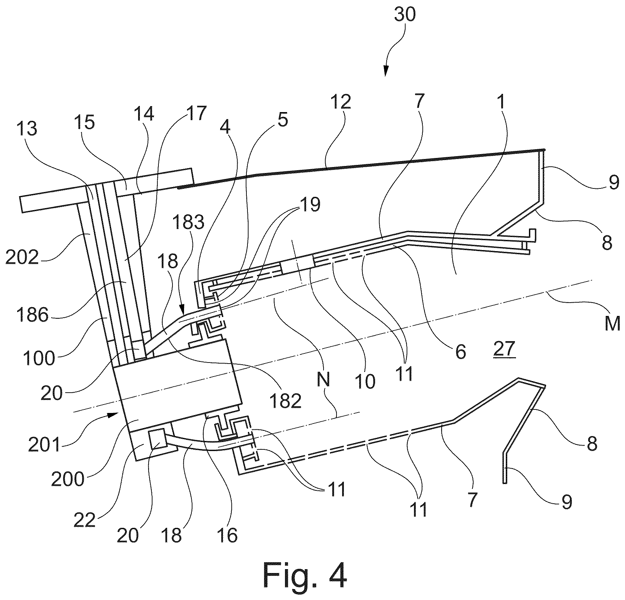

Fig. 4 zeigt gegenüber der Ausführung nach Fig. 3 eine Ausbildungsvariante der Düsenanordnung 100 mit zumindest zwei separaten Gas-Düsenvorrichtungen 18. Dabei ist an dem stromabseitigen Ende des Düsenhauptkörpers 200 ein umlaufendes Ringelement 22 angeordnet, in welchem vorzugsweise ringförmig umlaufend ein Gasplenum 20, als Gas-Verteilerraum, angeordnet ist. Die Gas-Zufuhrleitung 17 mündet in das Gasplenum 20. Pro Gas-Düsenvorrichtung 18 zweigt wiederum ein Hauptkörperabschnitt 183 von dem Gasplenum 20 ab.

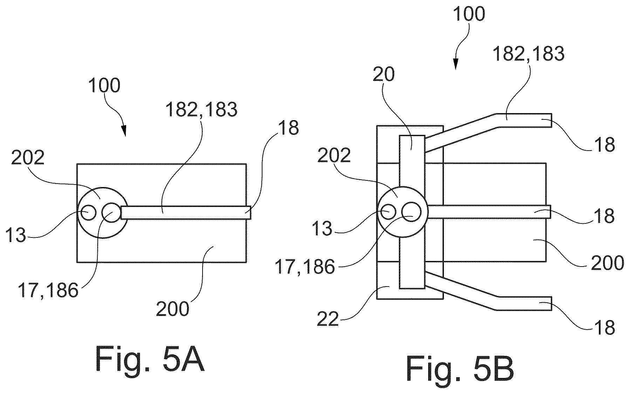

Fig. 5A und Fig. 5B zeigen jeweils Querschnittansichten durch den Schaft 202 in Draufsicht auf den Düsenhauptkörper 200. Fig. 5A zeigt eine Variante mit einer Gas-Düsenvorrichtung 18, ohne Gasplenum 20, z. B. in Ausbildung gemäß Fig. 2 oder Fig. 3. Fig. 5B zeigt eine Variante umfassend das Gasplenum 20 mit zumindest drei Gas-Düsenvorrichtungen 18.

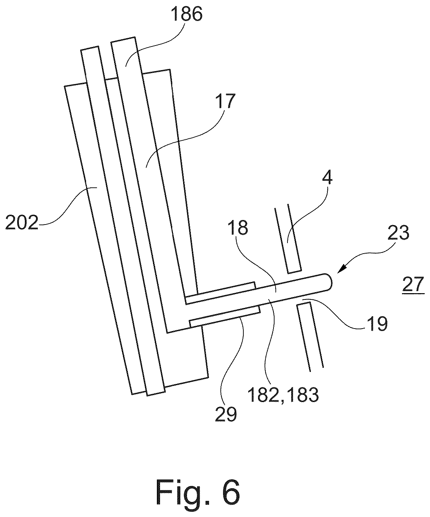

Wie Fig. 6 in einer Detaildarstellung der Gas-Düsenvorrichtung 18 zeigt, kann die Gas-Düsenvorrichtung 18, insbesondere um deren Rohrleitung 182, eine Hüllvorrichtung 29 aufweisen, die zumindest abschnittsweise um den Hauptkörperabschnitt 183 angeordnet ist und dem mechanischen Schutz dient. Die Hüllvorrichtung kann z. B. in Kontakt mit der Rohrleitung 182 stehen.

Weiterhin kann die Gas-Düsenvorrichtung 18 an ihrem stromabseitigen Ende eine, insbesondere konisch, verengte Düsenspitze 23, mit verengtem Strömungsquerschnitt, aufweisen, um die Gasströmung vor Austritt in den Brennraum 27 zu beschleunigen.

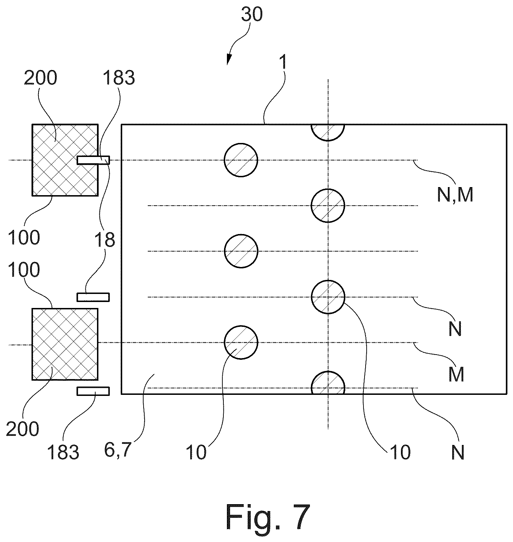

Fig. 7 zeigt in einer schematischen Draufsicht auf die Brennkammer 1 zwei mögliche Anordnungsvarianten des Düsenhauptkörpers 200 und der Gas-Düsenvorrichtung 18 bezüglich hier beispielhaft an der Brennkammer 1 angeordneter Mischluftöffnungen 10. Dabei sind zwei axial hintereinander angeordnete Reihen an Mischluftöffnungen 10 vorhanden, wobei jeweils in einer Reihe die Mischluftöffnungen 10 äquidistant zueinander angeordnet sind und in beiden Reihen den gleichen Abstand aufweisen. Die Mischluftöffnungen 10 beider Reihen sind jeweils um einen halben Öffnungs-Abstand in Umlaufrichtung versetzt zu der jeweils anderen Reihe angeordnet.

Der Düsenhauptkörper 200 ist jeweils in Umlaufrichtung auf Höhe einer der Mischluftöffnungen 10 angeordnet. Gemäß einer in Fig. 7 oben gezeigten Ausbildungsvariante ist eine der Gas-Düsenvorrichtungen 18 in Umlaufrichtung auf gleicher Position wie der Düsenhauptkörper 200, ebenfalls auf Höhe einer der Mischluftöffnungen 10 angeordnet.

Gemäß einer weiteren, in Fig. 7 unten gezeigten Ausbildungsvariante sind zwei Gas-Düsenvorrichtungen 18 jeweils zu beiden Seiten versetzt zu dem Düsenhauptkörpers 200 angeordnet. Dabei sind die Gas-Düsenvorrichtungen 18 mit den Düsenachsen N, d. h. mit den Hauptkörperabschnitten 183, bzgl. der Umlaufrichtung auf Höhe der jeweils zu dem Düsenhauptkörper 200 benachbarten Mischluftöffnungen 10 angeordnet.

Die Brennerachsen M und die Düsenachsen N sind jeweils beispielhaft parallel zueinander ausgerichtet.

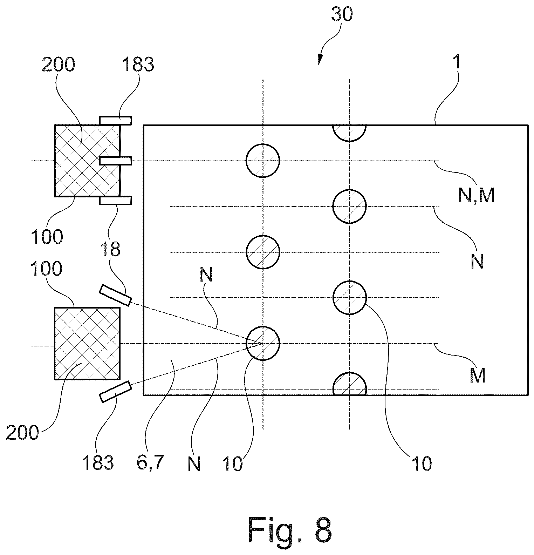

Fig. 8 zeigt in einer schematischen Draufsicht auf die Brennkammer 1 zwei weitere mögliche Anordnungsvarianten des Düsenhauptkörpers 200 und der Gas-Düsenvorrichtungen 18 zueinander und/oder bezüglich der Mischluftöffnungen 10. Gemäß einer in Fig. 8 oben gezeigten Ausbildungsvariante umfasst die Düsenanordnung 100 neben dem Düsenhauptkörper 200 drei Gas-Düsenvorrichtungen 18. Eine weitere, hier nicht dargestellte, vierte Gas-Düsenvorrichtung 18 kann vorhanden sein. Eine der Gas-Düsenvorrichtungen 18 ist in Umlaufrichtung auf gleicher Position wie der Düsenhauptkörper 200, und die anderen beiden Gas-Düsenvorrichtungen 18 sind in Umlaufrichtung beidseits des Düsenhauptkörpers 200 angeordnet.

Gemäß der zweiten, in Fig. 8 unten gezeigten Ausbildungsvariante sind zwei Gas-Düsenvorrichtungen 18, jeweils eine auf einer Seite des Düsenhauptkörpers 200 in Umlaufrichtung, angeordnet. Bei der gezeigten Variante sind die Düsenachsen N bezüglich der Umlaufrichtung in Richtung der Brennerachse M des Düsenhauptkörpers 200 derart geneigt angeordnet, dass sich die beiden Düsenachsen N und die Brennerachse M axial auf Höhe derjenigen Mischluftöffnung 10 kreuzen, die in Umlaufrichtung auf Position des Düsenhauptkörpers 200 angeordnet ist.

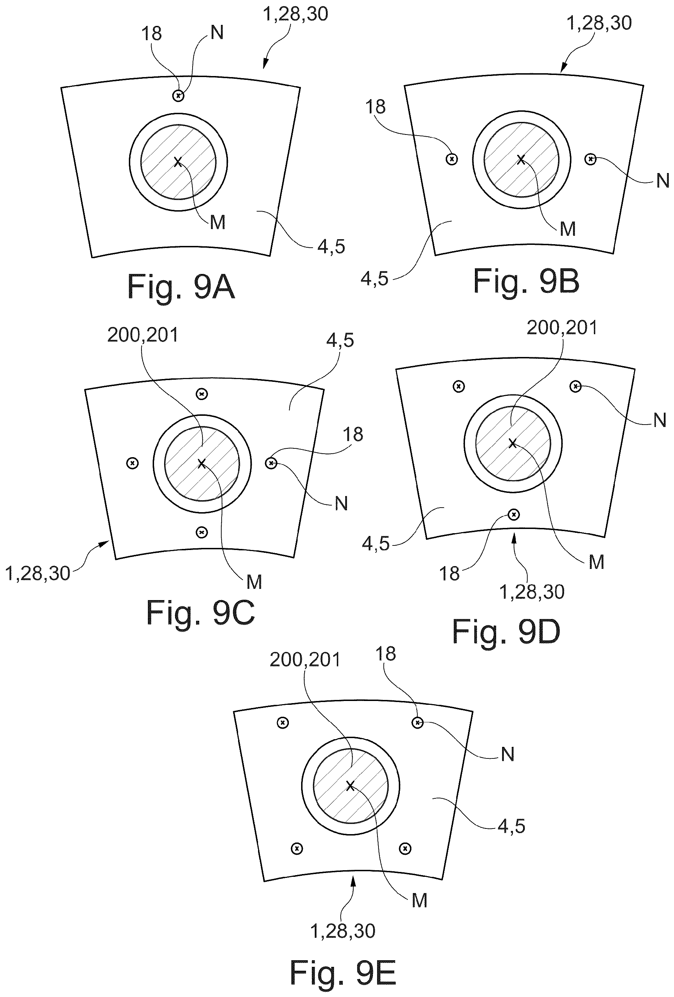

In Fig. 9A, Fig. 9B, Fig. 9C und Fig. 9D sind vier vorteilhafte Eindüsungspositionen dargestellt, wobei die Brennkammer 1 ringförmig umlaufend um eine Mittelachse, als Ringbrennkammer, ausgestaltet ist (hier nicht vollständig dargestellt). Die Brennkammer 1 weist dabei in Umlaufrichtung mehrere Sektoren 28 auf, wobei vorzugsweise jedem Sektor 28 eine Frontplatte 4 zugeordnet ist. Fig. 9A bis Fig. 9D zeigen dabei jeweils ein Ausführungsbeispiel der Frontplatte 4 umfassend den Hitzeschild 5 eines jeweiligen Sektors 28 der Brennkammer 1 in Draufsicht. Die Brennkammer 1 in Ausbildung als Ringbrennkammer weist insbesondere umlaufend die gleiche Ausführungsvariante der Frontplatte 4 auf.

In jedem der Ausführungsbeispiele ist jeweils genau ein Düsenhauptkörper 200 mit einer Flüssigdüsenanordnung 201, mittig der Frontplatte 4, angeordnet. Die Position des Düsenhauptkörpers 200, sowie nachfolgend die Positionen der Gas-Düsenvorrichtungen 18, beziehen sich jeweils auf deren Mittelachsen (Brennerachse M bzw. Düsenachse N).

Gemäß Fig. 9A besteht eine bevorzugte Ausgestaltungsvariante darin, dass an dem Sektor 28 genau eine Gas-Düsenvorrichtung 18 vorhanden ist, die bezüglich der Mittelachse der Ringbrennkammer (hier nicht dargestellt) radial außen und umlaufend auf der gleichen Position bezüglich des Düsenhauptkörpers 200 angeordnet ist.

Gemäß Fig. 9B besteht eine weitere bevorzugte Ausgestaltungsvariante darin, dass an dem Sektor 28 genau zwei Gas-Düsenvorrichtungen 18 vorhanden sind, die bezüglich der Mittelachse radial auf gleicher Position und umlaufend jeweils nach einer Seite versetzt (jedoch nicht an einer Sektorkante der Frontplatte 4) bezüglich des Düsenhauptkörpers 200 sowie vorzugsweise äquidistant zu selbigem angeordnet sind.

Gemäß Fig. 9C, die eine besonders bevorzugte Ausgestaltungsvariante darstellt, sind genau vier Gas-Düsenvorrichtungen 18 pro Düsenhauptkörper 200 vorhanden, wobei zwei radial auf gleicher Position und umlaufend beidseitig versetzt bezüglich des Düsenhauptkörpers 200, und zwei radial oberhalb und unterhalb des Düsenhauptkörpers 200 versetzt zueinander, und umlaufend auf gleicher Position bezüglich des Düsenhauptkörpers 200 angeordnet sind. Die Gas-Düsenvorrichtungen 18 sind vorzugsweise äquidistant zu dem Düsenhauptkörper 200 und/oder zueinander angeordnet.

Gemäß Fig. 9D besteht eine weitere bevorzugte Ausgestaltungsvariante darin, dass an dem Sektor 28 genau drei Gas-Düsenvorrichtungen 18 vorhanden sind, wobei eine der Gas-Düsenvorrichtungen 18 radial außen und umlaufend auf gleicher Position, und zwei radial innen und beidseitig versetzt zu dem Düsenhauptkörper 200 angeordnet sind. Die Gas-Düsenvorrichtungen 18 sind vorzugsweise äquidistant zu dem Düsenhauptkörper 200 und/oder zueinander angeordnet.

Gemäß Fig. 9E besteht eine weitere bevorzugte Ausgestaltungsvariante darin, dass an dem Sektor 28 genau vier Gas-Düsenvorrichtungen 18 vorhanden sind, jeweils umlaufend versetzt zu dem Düsenhauptkörper 200, wobei zwei der Gas-Düsenvorrichtungen 18 radial außen, und zwei radial innen angeordnet sind. Die Gas-Düsenvorrichtungen 18 sind vorzugsweise äquidistant zu dem Düsenhauptkörper 200 und/oder zueinander und/oder zu einer Sektorkante angeordnet.

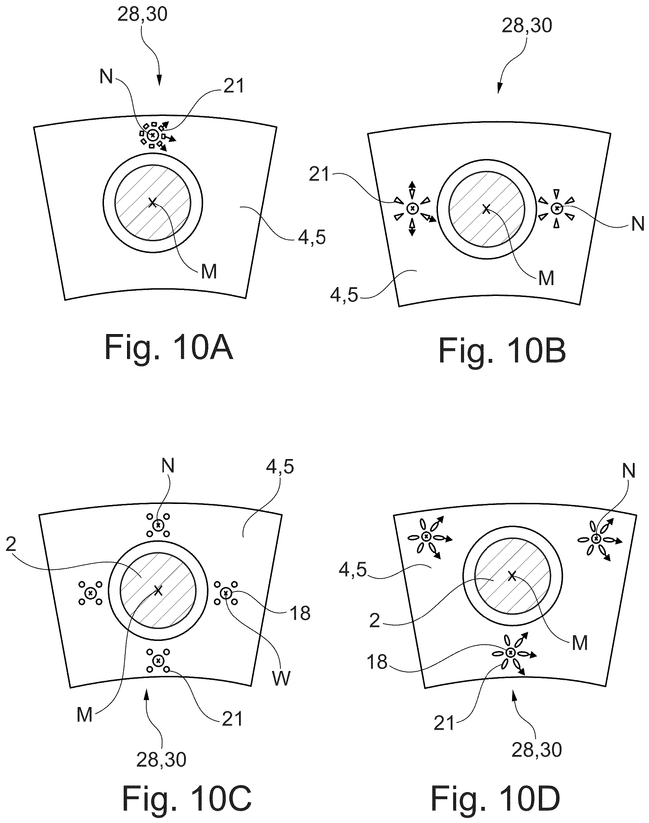

Fig. 10A, Fig. 10B, Fig. 10C und Fig. 10D zeigen die Ausbildungsvarianten im Wesentlichen gemäß Fig. 9A bis Fig. 9D, wobei im Unterschied dazu jeweils ringförmig um die und äquidistant zu den Gas-Düsenvorrichtungen 18 mehrere Kühlluftöffnungen 21 angeordnet sind. Dabei sind unterschiedliche beispielhafte Formen der Strömungsquerschnitte der Kühlluftöffnungen 21 dargestellt. Die Kühlluftöffnungen 21 sind derart ausgebildet, dass ein jeweils hindurchtretender Kühlluftstrahl in Hauptströmungsrichtung parallel oder radial nach außen bezüglich der Düsenachse N in den Brennraum 27 austritt. Möglich ist die Ausbildung mit den Kühlluftöffnungen 21 auch bei einer Anordnung mit vier Düsenvorrichtungen 18 wie in Fig. 9E ohne Kühlluftöffnungen 21 gezeigt.

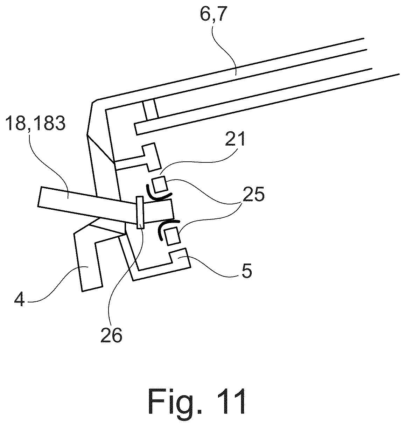

Fig. 11 zeigt in einem Detail im Längsschnitt eine mögliche Ausbildung zur Integration der Gas-Düsenvorrichtung 18 in die Frontplatte 4 mit dem Hitzeschild 5. Dabei ist an dem stromabseitigen Endabschnitt des Hauptkörperabschnitts 183 umlaufend um denselben eine Dichtvorrichtung 25 zur schwimmenden Lagerung der Gas-Düsenvorrichtung 18 an dem Hitzeschild 5 angeordnet. Beispielsweise mittels eines insbesondere umlaufenden Kragens 26 an der Gas-Düsenvorrichtung 18, welcher im montierten Zustand unmittelbar stromauf des Hitzeschilds 5 angeordnet ist, wird die Dichtvorrichtung 25 an dem Hitzeschild 5 radial und/oder in Umlaufrichtung in Position gehalten. Eine axiale Bewegung ist möglich. Bei der Montage wird die Dichtvorrichtung 25 insbesondere axial von hinten an dem Hitzeschild 5 montiert. Zur zumindest temporären Halterung bei der Montage kann die Dichtvorrichtung 25 provisorisch an den Hitzeschild 5 geklebt werden.

### Bezugszeichenliste

- 1: Brennkammer
- 100: Düsenanordnung
- 2: Flüssigkraftstoffdüse
- 200: Düsenhauptkörper
- 201: Flüssigdüsenanordnung
- 202: Schaft
- 3: Haube
- 4: Frontplatte
- 5: Hitzeschild
- 6: Brennkammerwand
- 7: Brennkammerwand
- 8: Brennkammeraufhängung
- 9: Brennkammerflansch
- 10: Mischluftöffnung
- 11: Kühlöffnungen
- 12: Außengehäuse
- 13: Flüssig-Zufuhrleitung
- 14: Öffnung
- 15: Flansch
- 16: Brennerdichtung
- 17: Gas-Zufuhrleitung
- 18: Gas-Düsenvorrichtung
- 182: Rohrleitung
- 183: Hauptkörperabschnitt
- 186: Gas-Kraftstoffkanal
- 19: Öffnung
- 20: Gasplenum
- 21: Kühlluftöffnung
- 22: Ringelement
- 23: Düsenspitze
- 24: Kühlöffnung
- 25: Dichtvorrichtung
- 26: Kragen
- 27: Brennraum
- 28: Sektor
- 29: Hüllvorrichtung
- 30: Brennkammeranordnung
- M: Brennerachse
- N: Düsenachse

## Patentansprüche

1. Düsenanordnung (100) zum Einbringen von gasförmigem Kraftstoff, insbesondere enthaltend Wasserstoff, und flüssigem Kraftstoff in eine Brennkammer (1) einer Gasturbine eines Flugzeugs, mit einem stromabseitigen, entlang einer Brennerachse (M) ausgerichteten Düsenhauptkörper (200) umfassend eine Flüssigdüsenanordnung (201) zur Zufuhr des flüssigen Kraftstoffes in die Brennkammer (1), einem stromaufseitigen Flansch (15) zur Montage der Düsenanordnung (100) an einem Außengehäuse (12) und mit einem zwischen dem Flansch (15) und dem Düsenhauptkörper (200) verlaufenden Schaft (202), wobei in dem Schaft (202) eine Flüssig-Zufuhrleitung (13) zur Leitung des flüssigen Kraftstoffes verläuft,
**dadurch gekennzeichnet,**
**dass** in dem Schaft (202) weiterhin eine Gas-Zufuhrleitung (17) zur Leitung des gasförmigen Kraftstoffes verläuft, und
**dass** die Düsenanordnung (100) zumindest eine Gas-Düsenvorrichtung (18) mit einem von dem Düsenhauptkörper (200) separaten, entlang einer Düsenachse (N) ausgerichteten Hauptkörperabschnitt (183) umfasst, und die Gas-Düsenvorrichtung (18) eine Rohrleitung (182) aufweist, wobei die Gas-Düsenvorrichtung (18) aus der Rohrleitung (182) gebildet ist.

2. Düsenanordnung (100) nach Anspruch 1,
**dadurch gekennzeichnet,**
**dass** die Gas-Düsenvorrichtung (18) keinen Luftkanal umfasst.

3. Düsenanordnung (100) nach Anspruch 1 oder 2,
**dadurch gekennzeichnet,**
**dass** die Gas-Zufuhrleitung (17) unmittelbar in den Hauptkörperabschnitt (183) übergeht.

4. Düsenanordnung (100) nach einem der vorhergehenden Ansprüche,
**dadurch gekennzeichnet,**
**dass** zwischen der Gas-Zufuhrleitung (17) und dem Hauptkörperabschnitt (183) ein, insbesondere in einem Ringelement (22) um den Düsenhauptkörper (200) angeordnetes, Gasplenum (20) angeordnet ist.

5. Düsenanordnung (100) nach einem der vorhergehenden Ansprüche,
**dadurch gekennzeichnet,**
**dass** um den Hauptkörperabschnitt (183) zumindest abschnittsweise eine Hüllvorrichtung (29) angeordnet ist.

6. Düsenanordnung (100) nach einem der vorhergehenden Ansprüche,
**dadurch gekennzeichnet,**
**dass** der Hauptkörperabschnitt (183) zumindest abschnittsweise, insbesondere an seinem stromabseitigen Ende, radial beabstandet von dem Düsenhauptkörper (200) angeordnet ist.

7. Düsenanordnung (100) nach einem der vorhergehenden Ansprüche,
**dadurch gekennzeichnet,**
**dass** die Düsenanordnung (18) an ihrem stromabseitigen Ende eine, insbesondere konisch, verengte Düsenspitze (23) aufweist.

8. Düsenanordnung (100) nach einem der vorhergehenden Ansprüche,
**dadurch gekennzeichnet,**
**dass** der Hauptkörperabschnitt (183) mit der Düsenachse (N)
- parallel zu der Brennerachse (M) des Düsenhauptkörpers (200) oder
- in Richtung der Brennerachse (M) geneigt ausgerichtet ist, beispielsweise derart, dass die Brennerachse (M) und die Düsenachse (N) sich in montiertem Zustand axial auf Höhe einer der Mischluftöffnungen (10) einer Brennkammer (1) schneiden.

9. Düsenanordnung (100) nach einem der vorhergehenden Ansprüche,
**dadurch gekennzeichnet,**
**dass** die Brennerachse (M) und die Düsenachse/n (N) derart zueinander beabstandet angeordnet sind, dass in montiertem Zustand an einer Brennkammeranordnung (30) aufweisend Mischluftöffnungen (10) der Düsenhauptkörper (200) und/oder der Hauptkörperabschnitt (183) auf gleicher Position in Umlaufrichtung angeordnet ist wie jeweils eine der Mischluftöffnungen (10).

10. Düsenanordnung (100) nach einem der vorhergehenden Ansprüche,
**dadurch gekennzeichnet,**
**dass** dem Düsenhauptkörper (200) jeweils zumindest eine, z. B. genau eine, genau zwei, genau drei oder genau vier Gas-Düsenvorrichtungen (18) zugeordnet sind, die in montiertem Zustand an einer Brennkammeranordnung (30) in Ausbildung als Ringbrennkammer bezüglich einer Mittelachse derselben
- bei genau einer Gas-Düsenvorrichtung (18) radial außen bzgl. der Brennerachse (M) und umlaufend auf der gleichen Position wie die Brennerachse (M), und/oder
- bei genau zwei Gas-Düsenvorrichtungen (18) radial auf gleicher Position wie die Brennerachse (M) und umlaufend versetzt zu der Brennerachse (M) und vorzugsweise äquidistant bzgl. der Brennerachse (M), und/oder
- bei genau drei Gas-Düsenvorrichtungen (18) zwei derselben radial außen bzgl. der Brennerachse (M) und eine innen bzgl. der Brennerachse (M) und vorzugsweise äquidistant bzgl. der Brennerachse (M) und/oder zueinander, und/oder
- bei genau vier Gas-Düsenvorrichtungen (18) zwei derselben radial auf gleicher Position wie die Brennerachse (M) und umlaufend versetzt und zwei radial außen und innen bzgl. der Brennerachse (M) und umlaufend auf gleicher Position, und vorzugsweise äquidistant bzgl. der Brennerachse (M) und/oder zueinander, und/oder
- bei genau vier Gas-Düsenvorrichtungen (18) zwei derselben radial außen und zwei radial innen, sowie jeweils umlaufend versetzt bzgl. der Brennerachse (M), und vorzugsweise äquidistant bzgl. der Brennerachse (M) und/oder zueinander,
angeordnet ist/sind.

11. Brennkammeranordnung (30) mit einer Brennkammer (1) umfassend eine eintrittsseitige Frontplatte (4) mit einem brennkammerseitig an der Frontplatte (4) flächig angeordneten Hitzeschild (5), Brennkammerwände (6, 7) zur Umgrenzung eines Brennraums (27), und zumindest eine entlang einer Brennerachse (M) ausgerichtete Düsenanordnung (100) nach einem der vorhergehenden Ansprüche, mit einem Düsenhauptkörper (200) zur Zugabe von flüssigem Kraftstoff und mit einer Gas-Düsenvorrichtung (18) zur Zugabe von gasförmigem Kraftstoff, insbesondere enthaltend Wasserstoff, über die Frontplatte (4) mit dem Hitzeschild (5) in den Brennraum (27).

12. Brennkammeranordnung (30) nach Anspruch 11,
**dadurch gekennzeichnet,**
**dass** in dem Hitzeschild (5) jeweils ringförmig um die Gas-Düsenvorrichtung (18) mehrere Kühlluftöffnungen (21) angeordnet sind, die derart ausgebildet sind, dass ein jeweils hindurchtretender Kühlluftstrahl parallel oder radial nach außen strömend ausgerichtet ist.

13. Brennkammeranordnung (30) nach einem der Ansprüche 11 oder 12,
**dadurch gekennzeichnet,**
**dass** die Gas-Düsenvorrichtung (18) stromabseitig, ggf. jeweils, mit einer Dichtvorrichtung (25) schwimmend an der Frontplatte (4), insbesondere in dem Hitzeschild (5) gelagert ist.

14. Brennkammeranordnung (30) nach einem der Ansprüche 11 bis 13,
**dadurch gekennzeichnet,**
**dass** stromauf der Frontplatte (4) keine Haube (3) angeordnet ist.

15. Triebwerk für ein Flugzeug mit einer Brennkammeranordnung (30) nach einem der Ansprüche 11 bis 14.
